# EUROPEAN PATENT APPLICATION

(11) **EP 1 843 224 A2**
(43) Date of publication of application: **10.10.2007**
(21) Application number: 06014933.3
(22) Date of filing: 18.07.2006
(51) Int. Cl.: G03H 1/04, G11B 7/0065

(54) **Apparatus, recording and reproducing methods for holographic optical information data**

(30) Priority: 06.04.2006 KR 20060031304; 25.04.2006 KR 20060037382
(71) Applicant: Daewoo Electronics Corporation, Seoul (KR)
(72) Inventor: Roh, Jae-Woo, Seogyo-dong Mapo-gu Seoul (KR); Park, Joo-Youn, Banghak-dong Dobong-gu Seoul (KR)
(74) Representative: Thun, Clemens

(57) **Abstract**

There is provided an optical information recording apparatus comprising: a light source; a light modulator in which a reference beam pattern for converting a beam emitted from the light source into a reference beam and a signal beam pattern for converting the beam into a signal beam are formed and varies the reference beam pattern at the time of multiplexing and recording optical information; and a lens allowing optical information to be recorded in an optical information storage medium by means of interference between the reference beam and the signal beam when the signal beam and the reference beam emitted from the light modulator are irradiated to the optical information storage medium. Accordingly, in an optical information processing apparatus using a coaxial optical system, it is possible to more efficiently multiplex optical information and to enhance a storage density of holographic optical information.

## Description

### BACKGROUND

### 1. Technical Field

The present invention relates to an optical information processing apparatus, an optical information recording method, and an optical information reproducing method, and more particularly, to an optical information processing apparatus for multiplexing and recording optical information by modifying a reference beam pattern formed in a light modulator, and an optical information recording method and an optical information reproducing method using the optical information processing apparatus.

### 2. Related Art

Examples of an optical data processing apparatus can include a digital versatile disc (DVD), a high definition DVD (HD-DVD), a blue-ray disc (BD), a near-field optical information processing apparatus, and a holographic optical information processing apparatus.

The holographic optical information processing apparatus stores data in a storage medium by irradiating an optically modulated signal beam and a reference beam to the storage medium. Here, the reference beam forms an interference fringe in the storage medium by means of intersection with the signal beam. The holographic optical information processing apparatus reproduces data by irradiating the reference beam to the interference fringe of the storage medium to output the data stored in the storage medium by means of diffraction resulting from the interference fringe.

The holographic optical information processing apparatus can store data in a multiplexing manner by irradiating the reference beam to one beam spot at different angles, thereby enhancing the recording capacity of the storage medium. The multiplexed and recorded data can be output by irradiating only the reference beam at different angles at the time of reproducing the data. That is, the holographic optical information processing apparatus is an ultra-high-capacity data processing apparatus which can input data to and output data from one beam spot with the data superposed in multi layers.

The holographic optical information processing apparatus employs a method of multiplexing a beam so as to enhance the recording density of data. Examples of the beam multiplexing method include an angular multiplexing method, a phase-code multiplexing method, a wavelength multiplexing method, and a shift multiplexing method. In the angular multiplexing method, a multiplexing operation is performed by changing an incident angle of a reference beam. In the phase-code multiplexing method, a multiplexing operation is performed by spatially modulating a phase of a beam. In the wavelength multiplexing method, a multiplexing operation is performed by varying a wavelength of a beam by the use of a variable wavelength laser. In the shift multiplexing method, a multiplexing operation is performed by moving a storage medium.

In the holographic optical information processing apparatus, data are recorded in a storage medium by irradiating a reference beam and a signal beam to the storage medium at different angles, and data are reproduced from the storage medium by irradiating the reference beam to the storage medium and detecting a beam diffracted and output in the opposite direction from the storage medium. Such a kind of known art is disclosed in U.S. Patent No. 6,058,232, issued to ByungHo Lee et al. and entitled "Volume Holographic Data Storage System using a Beam Pattern from a tapered Optical Fiber."

Another known art is disclosed in U.S. Unexamined Patent Publication No. US2005/0007930, filed by Hideyoshi et al. and entitled "Optical Information Recording Apparatus." In the U.S. unexamined patent publication, a technique of using a digital micro-mirror device as a spatial light modulator and irradiating a reference beam and a signal beam to a storage medium in a coaxial optical paths at the time of recording optical information is disclosed.

On the other hand, as described above, the holographic optical information processing apparatus can multiplex the optical information by the use of a variety of multiplexing methods. However, in the U.S. unexamined patent publication, since the reference beam and the signal beam have the same optical axis, it is difficult to multiplex the optical information by an angular multiplexing method.

### SUMMARY

The present invention is contrived to solve the above-mentioned problems. An object of the invention is to provide an optical information processing apparatus which can record and reproduce optical information by guiding a reference beam and a signal beam by the use of a coaxial optical system and can multiplex the optical information by adjusting a reference beam pattern of a light modulator, and an optical information recording method and an optical information reproducing method using the optical information processing apparatus.

According to an aspect of the invention, there is provided an optical information recording apparatus comprising: a light source; a light modulator in which a reference beam pattern for converting a beam emitted from the light source into a reference beam and a signal beam pattern for converting the beam into a signal beam are formed and varies the reference beam pattern at the time of multiplexing and recording optical information; and a lens allowing optical information to be recorded in an optical information storage medium by means of interference between the reference beam and the signal beam when the signal beam and the reference beam emitted from the light modulator are irradiated to the optical information storage medium.

According to another aspect of the invention, there is provided an optical information reproducing apparatus comprising: a light source; a light modulator which has a reference beam pattern for converting a beam emitted from the light source into a reference beam and varies the reference beam pattern at the time of reproducing optical information multiplexed and recorded in an optical information storage medium; a lens guiding the reference beam, which travels in the traveling direction of a recording reference beam used at the time of record, from the light modulator to the optical information storage medium; and an optical information detector detecting a reproduced beam emitted from the optical information storage medium.

According to another aspect of the invention, there is provided an optical information recording method comprising: forming a signal beam from a beam emitted from a light source by the use of a signal beam pattern and forming a reference beam coaxial with the signal beam from the beam emitted from the light source by the use of a reference beam pattern; recording optical information in an optical information storage medium by means of interference between the reference beam and the signal beam, when the signal beam and the reference beam are irradiated to the optical information storage medium; forming a different signal beam by the use of a different signal beam pattern and forming a different reference beam coaxial with the different signal beam by the use of a different reference beam pattern for multiplexing record; and superposing and recording optical information in the optical information storage medium by means of interference between the different reference beam and the different signal beam, when the different signal beam and the different reference beam are irradiated to the optical information storage medium.

According to another aspect of the invention, there is provided an optical information recording method comprising: generating a signal beam by modulating recording optical information with a light modulator and generating a reference beam coaxial with the signal beam by the use of a reference beam pattern with the light modulator; recording the optical information in an optical information storage medium by means of interference between the signal beam and the reference beam and forming a track including a plurality of recording areas, when the signal beam and the reference beam are irradiated to the optical information storage medium; and irradiating a different reference beam, which is obtained by changing the reference beam pattern to a different reference beam pattern, along with the signal beam to the optical information storage medium and forming a different track including a plurality of different recording areas partially overlapping with the recording areas of the track.

According to another aspect of the invention, there is provided an optical information recording method comprising: generating a signal beam by modulating recording optical information with a light modulator and generating a reference beam coaxial with the signal beam by the use of a reference beam pattern with the light modulator; recording the optical information of the signal beam in an optical information storage medium by means of interference between the signal beam and the reference beam and forming a track including a plurality of recording areas when the signal beam and the reference beam are irradiated to the optical information storage medium, wherein the recording areas adjacent to each other are formed to partially overlap with each other by the use of a different reference beam having not correlation with the reference beam along with the reference beam; and forming a different track including a plurality of different recording areas, in which the optical information of the signal beam is recorded, at positions overlapping with the recording areas of the track by the use of a different reference beam having no correlation with the reference beam, wherein the different recording areas adjacent to each other are formed to partially overlap with each other by the use of the reference beams having no correlation with each other.

According to another aspect of the invention, there is provided an optical information reproducing method comprising: irradiating a beam to a light modulator in which a reference beam pattern is formed around a signal beam pattern for record; reproducing optical information from an optical information storage medium by irradiating the reference beam passing through the light modulator to a recording area of the optical information storage medium; changing the reference beam pattern of the light modulator to a different reference beam pattern and irradiating the beam to the light modulator; and reproducing different optical information from the optical information storage medium by irradiating a different reference beam generated from the different reference beam pattern to the recording area of the optical information storage medium.

### BRIEF DESCRIPTION OF THE DRAWINGS

The above and other features and advantages of the present invention will become more apparent by describing in detail exemplary embodiments thereof with reference to the attached drawings in which:
Fig. 1 is a diagram illustrating a configuration of an optical information processing apparatus according to an exemplary embodiment of the invention;
Fig. 2 is a conceptual diagram illustrating traveling states of a signal beam and a reference beam at the time of recording optical information in the optical information processing apparatus according to the exemplary embodiment of the invention;
Fig. 3 is a diagram illustrating a signal beam pattern and a reference beam pattern at the time of recording optical information in the optical information processing apparatus according to the exemplary embodiment of the invention;
Figs. 4A and 4B are enlarged diagrams the reference beam pattern in a light modulator at the time of multiplexing optical information according to the exemplary embodiment of the invention;
Fig. 5 is a graph illustrating diffraction efficiency with respect to a rotation angle of the signal beam pattern according to the exemplary embodiment of the invention;
Fig. 6 is a graph illustrating a signal-to-noise ratio with respect to the rotation angle of the signal beam pattern according to the exemplary embodiment of the invention;
Fig. 7 is a graph illustrating a relationship between thickness and diffraction efficiency of an optical information storage medium;
Fig. 8A is a photograph showing a reproduction result of optical information when the rotation angle of the reference beam pattern is 0 degree in an experimental example of the exemplary embodiment of the invention;
Figs. 8B to 8E are photographs showing reproduction results of optical information when the rotation angle of the reference beam pattern is 0 degree, 2 degree, 4 degree, 6 degree, and 8 degree in the experimental example of the exemplary embodiment of the invention;
Figs. 9A and 9B are diagrams illustrating the reference beam pattern in the light modulator at the time of multiplexing optical information according to another exemplary embodiment of the invention;
Figs. 10A and 10B are diagrams illustrating a reference beam pattern according to another exemplary embodiment of the invention;
Fig. 11 is a diagram illustrating a configuration of an optical information processing apparatus according to another embodiment of the invention;
Fig. 12 is a flowchart illustrating an optical information recording method according to an exemplary embodiment of the invention;
Fig. 13 is a diagram illustrating the optical information recording method according to the exemplary embodiment of the invention;
Fig. 14 is a diagram illustrating an optical information recording method according to another exemplary embodiment of the invention;
Fig. 15 is a diagram illustrating an optical information recording method according to another exemplary embodiment of the invention; and
Fig. 16 is a flowchart illustrating an optical information reproducing method according to an exemplary embodiment of the invention.

### DESCRIPTION OF EXEMPLARY EMBODIMENTS

Hereinafter, an optical information processing apparatus, an optical information recording method, and an optical information reproducing method according to exemplary embodiments of the present invention will be described with reference to the attached drawings. The optical information processing apparatus according to the exemplary embodiments of the invention can be embodied as an optical information reproducing apparatus by excluding the structure of an optical information detector, while the optical information processing apparatus can be embodied as an optical information recording apparatus by excluding the structure of a light modulator and partially modifying the structure of an optical system. Accordingly, in the following description, the optical information processing apparatus will be described without distinguishing the recording apparatus and the reproducing apparatus.

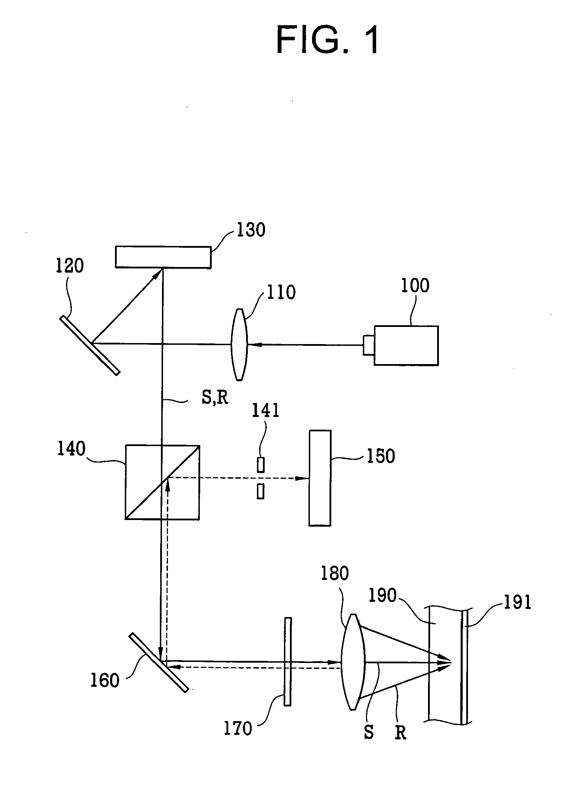

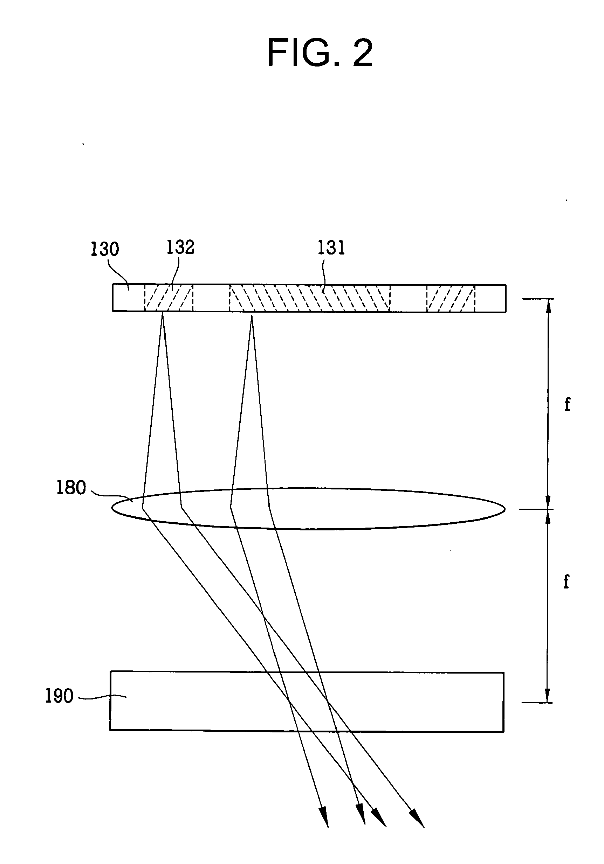

Fig. 1 is a diagram illustrating a configuration of an optical information processing apparatus according to an exemplary embodiment of the invention and Fig. 2 is a conceptual diagram illustrating traveling states of a signal beam and a reference beam at the time of recording optical information in the optical information processing apparatus according to the exemplary embodiment of the invention.

As shown in Figs. 1 and 2, the optical information processing apparatus according to an exemplary embodiment of the invention includes a light source 100. A red laser with a wavelength of 635nm to 650nm, a blue laser with a wavelength of 430nm or green laser with a wavelength 532nm can be used as the light source 100. The optical information processing apparatus further includes a lens 110 allowing a beam emitted from the light source 100 to travel as parallel light and a reflecting mirror 120 reflecting the beam passing through the lens 110 at a predetermined angle. The optical information processing apparatus further includes a light modulator 130 loading a modulated signal into the beam reflected by the reflecting mirror 120.

The light modulator 130 may be employed a reflecting type spatial light modulator as an example a digital micro-mirror device(DMD).

The light modulator 130 provides a signal beam pattern 131 and a reference beam pattern 132 for modulating a beam. Accordingly, the beam reflected by the reflecting mirror 120 is reflected and is supplied as a signal beam S and a reference beam R by the light modulator 130. In the light modulator 130, the signal beam pattern 131 is formed at the center portion of the light modulator 130 and the reference beam pattern 132 is formed around the signal beam pattern 131 in the light modulator 130.

The optical information processing apparatus further includes a beam splitter 140 guiding the signal beam S and the reference beam R coaxially traveling to an optical information storage medium 190 from the light modulator 130. The beam splitter 140 transmits a P polarized beam and reflects an S polarized beam. A shutter 141 and an optical information detector 150 are disposed beside the beam splitter 140. The optical information detector 150 may be a charge-coupled device (CCD), a complementary metal-oxide semiconductor (CMOS), or an optical device capable of detecting light. The shutter 141 is shut at the time of recording optical information and is opened at the time of reproducing optical information.

A reflecting mirror 160 reflecting the signal beam S and the reference beam R to the optical information storage medium 191 is disposed in an optical axial path of the beam splitter 140. A quarter-wavelength (λ/4) plate 170 is disposed next the reflecting mirror 160 and an objective lens 180 is disposed next the quarter-wavelength plate 170. The quarter-wavelength plate 170 converts the P polarized beam passing through the beam splitter 140 into a circularly polarized beam. Accordingly, the beam irradiated to the optical information storage medium 190 through the objective lens 180 is an S polarized beam.

The optical information storage medium 190 is disposed next the objective lens 180. The optical information storage medium 190 can be made of photopolymer. A reflecting plane 191 is formed on the surface of the optical information storage medium 190 opposite to the surface to which the beam is irradiated. The reflecting plane 191 reflects the beam passing through the optical information storage medium 190 in the opposite direction.

On the other hand, as shown in Fig. 2, the objective lens 180 is a convex lens. Accordingly, the signal beam S incident on the central portion of the objective lens 180 and the reference beam R incident on the circumferential portion of the objective lens 180 are different from each other in a refraction angle. That is, the refraction angle of the reference beam R is larger than that of the signal beam S at the time of recording optical information. Accordingly, the refracted signal beam S and the refracted reference beam R intersect each other at a position and a recording area of the optical information storage medium is located at the intersection. Holographic optical information is recorded in the optical information storage medium 190 by means of interference between the signal beam S and the reference beam R. The objective lens 180 or the optical information storage medium 190 can be controlled by an actuator (not shown) so as to control a focusing position.

In the exemplary embodiment, the optical information detector 150 is located beside the coaxial path of the beam traveling toward the optical information storage medium from the light modulator 130. Accordingly, a reproduced beam reproduced from the optical information storage medium 190 in response to the reference beam R at the time of reproducing optical information is reflected by the reflecting plane 191 of the optical information storage medium 190 and travels to the beam splitter 140 through the optical path of the reference beam R. Since the reproduced beam is an S polarized beam after passing through the quarter-wavelength plate 170, the reproduced beam is reflected by the beam splitter 140 and travels to the optical information detector 150. The optical information detector 150 decodes the optical information of the reproduced beam. On the other hand, the optical information detector may be located in the traveling direction of the beam passing through the optical information storage medium 190 at the time of recording optical information. In this case, it is not necessary to form the reflecting plane 191 in the optical information storage medium 190.

In the exemplary embodiment of the invention, the reference beam pattern 132 is provided in a variety of shapes for multiplexing record and reproduction of the optical information. Here, the multiplexing record means that optical information is superposed and recorded at the same position, and the multiplexing reproduction means that a plurality of optical information pieces recorded at the same position are reproduced.

Hereinafter, the reference beam pattern 132 formed in the light modulator 130 according to the exemplary embodiment of the invention will be described in more detail. The reference beam pattern 132 and the signal beam pattern 131 are formed in different areas of the light modulator 130. The optical information can be recorded and reproduced by allowing the signal beam S and the reference beam R generated from the patterns to interfere with each other on the optical information storage medium 190.

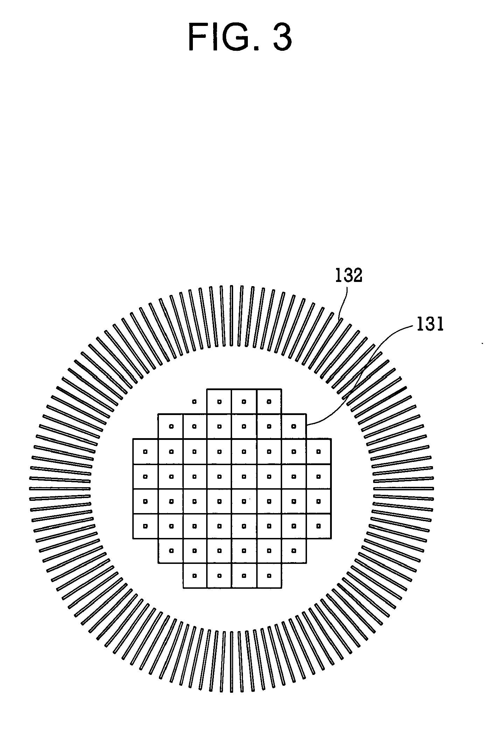

Fig. 3 is a diagram illustrating the signal beam pattern 131 and the reference beam pattern 132 at the time of recording optical information in the optical information processing apparatus according to the exemplary embodiment of the invention. As shown in Fig. 3, the signal beam pattern 131 is formed in the central area of the light modulator 130 and the reference beam pattern 132 is formed around the signal beam pattern 131 with a predetermined gap from the signal beam pattern 131. The reference beam pattern 132 has the form of a ring of pectinate patterns arranged in the circumferential direction. Optical information can be recorded and reproduced in a multiplexing manner by varying the reference beam pattern 132 in a variety of forms.

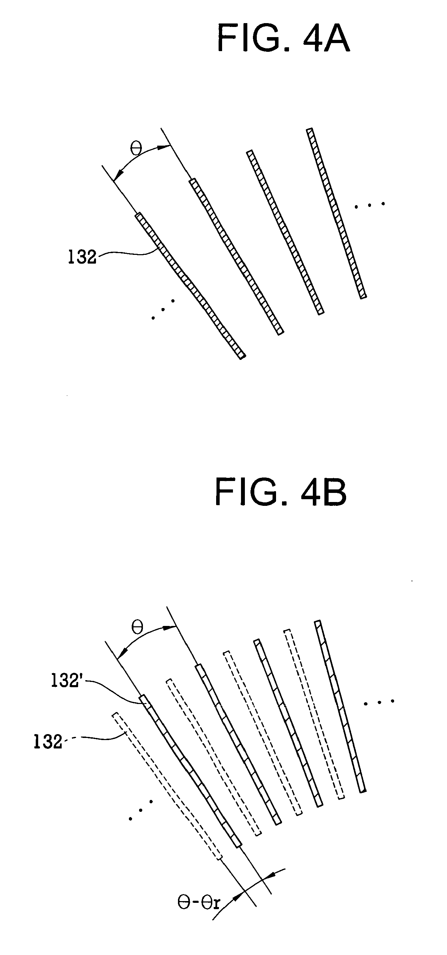

Figs. 4A and 4B are diagrams the reference beam pattern 132 in the light modulator 130 at the time of multiplexing optical information according to the exemplary embodiment of the invention. As shown in Figs. 4A and 4B, the reference beam R is modified by varying the formation angle of the pectinated patterns of the reference beam pattern 132. That is, when the angle between the pectinate patterns is "θ" (where θ = 360/number of pectinate patterns), the pectinate patterns can be rotated by θr (where 0<θr<θ), thereby obtaining a different reference beam pattern 132' having different pectinate patterns having no correlation. A plurality of different reference beam patterns can be obtained if 0<θr<θ is satisfied. Accordingly, it is possible to multiplex the optical information by the use of the reference beam pattern 132 and the reference beam patterns 132' having the pectinate patterns.

An experimental example thereof will be described hereinafter.

It is assumed that the angle between the pectinate patterns is 12 degree, the thickness of the optical information storage medium 190 is 200µm, the wavelength of the beam is 405nm, and the focal length of the objective lens 110 is 5mm. In this condition, it was concluded that optical information can be multiplexed by rotating the reference beam pattern 132 by a rotation angle of 2 degree or more. This conclusion is established in the following description. The below-mentioned graphs illustrate results of the experimental examples of the exemplary embodiment.

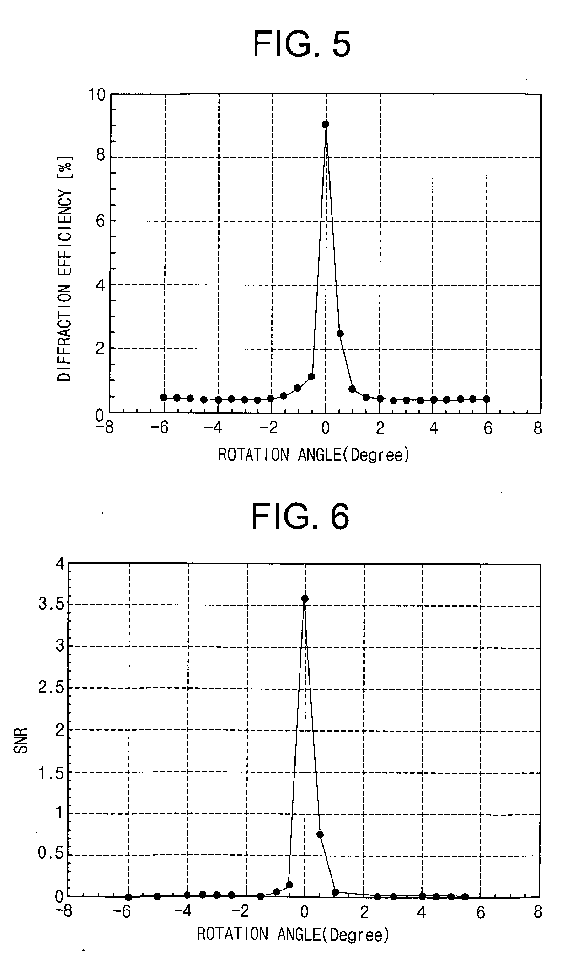

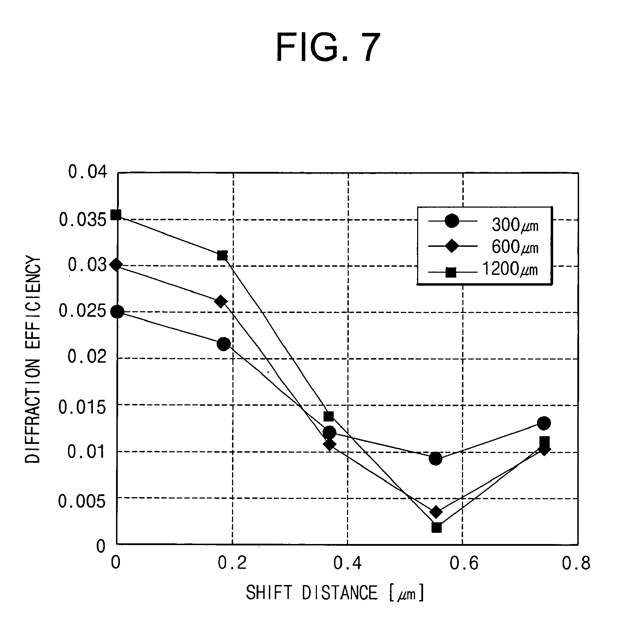

Fig. 5 is a graph illustrating diffraction efficiency with respect to the rotation angle of the signal beam pattern according to the exemplary embodiment of the invention, Fig. 6 is a graph illustrating a signal-to-noise ratio with respect to the rotation angle of the signal beam pattern according to the exemplary embodiment of the invention, and Fig. 7 is a graph illustrating a relationship between thickness and diffraction efficiency of the optical information storage medium.

As shown in Fig. 5, the diffraction efficiency was measured at the time of reproducing the optical information, which was recorded by the use of 30 pectinate patterns spaced by 12 degree from each other. When the rotation angle was about ±2 degree or more, the diffraction efficiency was about 0.5%. When the rotation angle was about ±2 degree or more, the signal-to-noise ratio was remarkably decreased so that the multiplexing is possible. Accordingly, when the angle between the pectinate patterns is 12 degree, it is possible to multiplex the optical information by rotating the pectinate patterns by 2 degree. As a result, the rotation angle for forming different pectinate patterns can be selected on the basis of the angle between the pectinate patterns of the reference beam pattern 132, thereby recording and reproducing the optical information in a multiplexing manner.

On the other hand, noises generated due to the multiplexing of the reference beam patterns 132 and 132' are not completely removed. However, the problem with the noises can be effectively solved by increasing the thickness of the optical information storage medium 190. Fig. 7 shows the diffraction efficiency with respect to the thickness of the optical information storage medium 190 at the time of shifting the optical information storage medium depending upon the thicknesses. As shown in Fig. 7, when the thickness of the optical information storage medium 190 varies to 300µm, 600µm, and 1200µm and the shift distance is 0, the optical information storage medium 190 with the thickness of 1200µm has the highest diffraction efficiency. When the optical information storage medium 190 is shifted, the diffraction efficiency of the optical information storage medium 190 with the thickness of 1200µm is rapidly lowered and is lowest at a position shifted by 0.8µm. Accordingly, it can be seen that the noise is reduced by increasing the thickness of the optical information storage medium 190, and it is thus possible to find out the optimal position for multiplexing and recording the optical information.

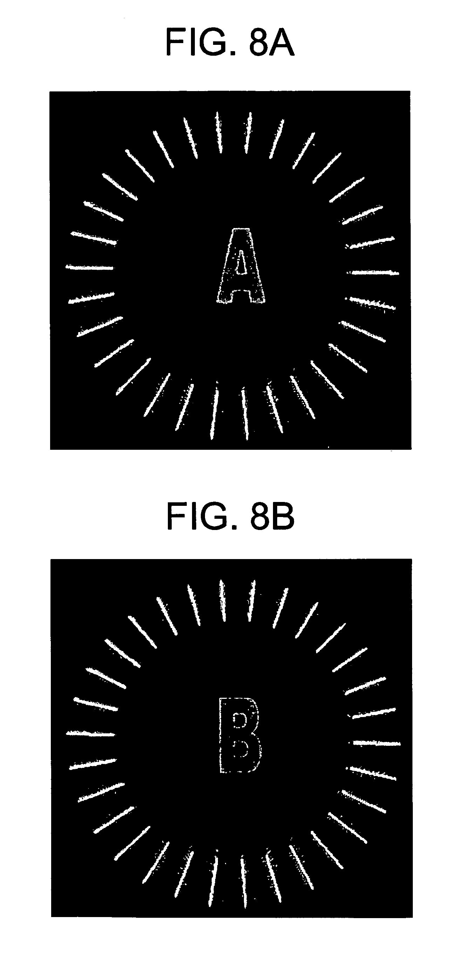

Fig. 8A is a photograph showing a reproduction result of the optical information when the rotation angle of the reference beam pattern is 0 degree in an experimental example of the exemplary embodiment of the invention and Figs. 8B to 8E are photographs showing reproduction results of the optical information when the rotation angle of the reference beam pattern is 0 degree, 2 degree, 4 degree, 6 degree, and 8 degree in the experimental example of the exemplary embodiment of the invention.

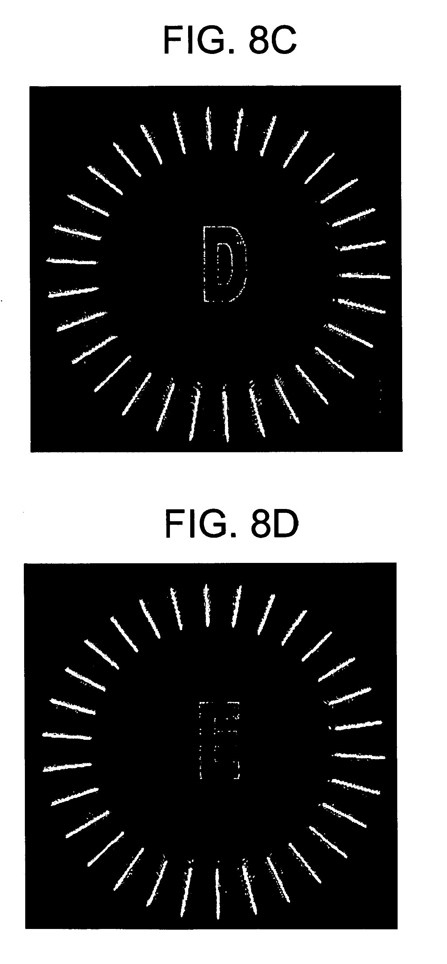

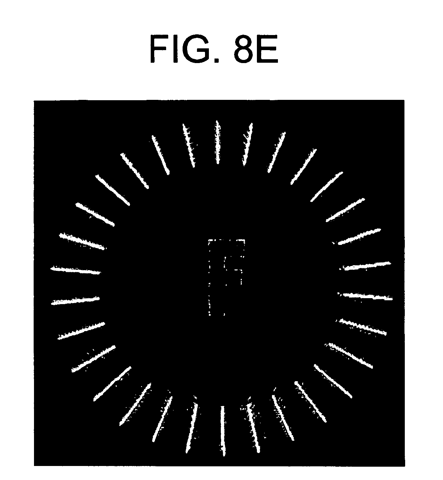

In the experimental example, 30 pectinate patterns are formed by setting the angle between the pectinate patterns to 12 degree, the thickness of the optical information storage medium 190 is 1000µm, the wavelength of the beam is 532nm, and the focal length of the objective lens 110 is 5mm. The recording data were recorded and reproduced using analog signals for the purpose of easy distinguishment and understanding. For the distinguishment of the reproduced optical information, "A" was recorded and reproduced in Fig. 8A, "B" was recorded and reproduced in Fig. 8B, "D" was recorded and reproduced in Fig. 8C, "E" was recorded and reproduced in Fig. 8D, and "F" was recorded and reproduced in Fig. 8E. The pectinate patterns used at the time of recording were reproduced and shown together. From the reproduction result, it can be seen that the optical information is effectively reproduced when the rotation angle of the pectinate patterns is 2 degree.

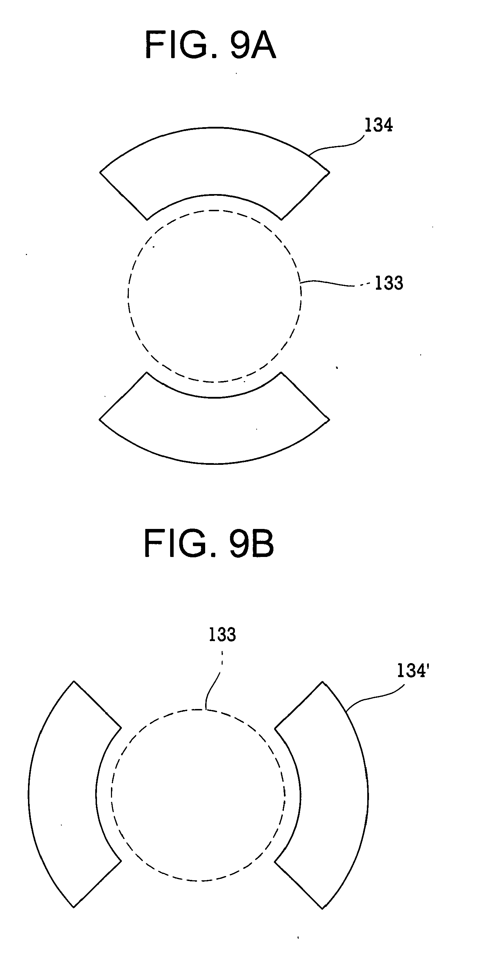

Figs. 9A and 9B are diagrams illustrating a reference beam pattern in the light modulator at the time of multiplexing optical information according to another exemplary embodiment of the invention. As shown in Figs. 9A and 9B, a first reference beam pattern 134 and a second reference beam pattern 134' are formed in the form of a fan. As shown in Fig. 9A, two fan shapes of the first reference beam pattern 134 are formed at 90 degree and 270 degree and are used to record or reproduce the optical information. As shown in Fig. 9B, two fan-shaped patterns of the second reference beam pattern 134' are formed at 0 degree and 180 degree and are used to multiple the optical information. These positions are only examples, and the shape, size, and position of the reference beam pattern may be modified variously.

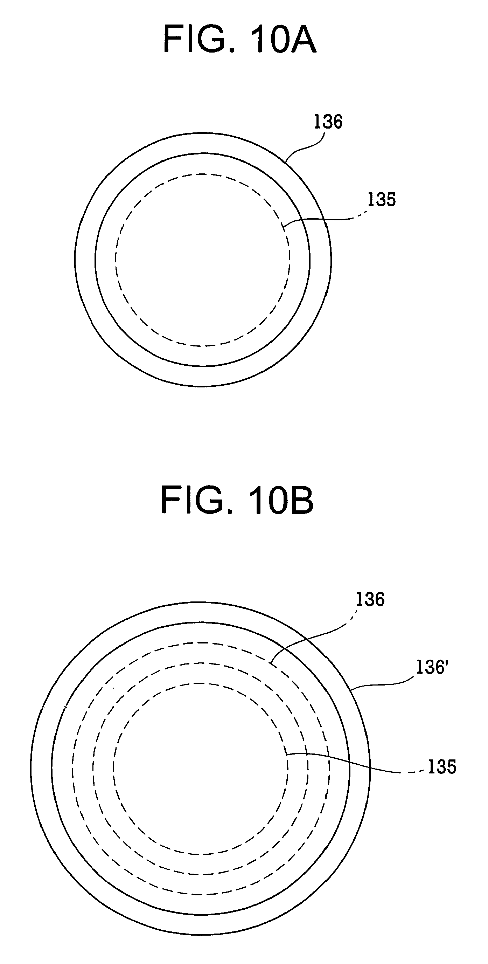

Figs. 10A and 10B are diagrams illustrating a reference beam pattern according to another exemplary embodiment of the invention. As shown in the figures, a first reference beam pattern 136 is formed in a ring shape outside a signal beam pattern 135. As shown in Fig. 10A, the first reference beam pattern 136 of a ring shape is formed around the signal beam pattern 135 and a second reference beam pattern 136' may be formed outside the first reference beam pattern 136 to have a different diameter as shown in Fig. 10B. the second reference beam pattern 136' may have a different diameter.

As described in the exemplary embodiments, the reference beam pattern may be modified in a variety of shapes as long as the reference beam patterns have no correlation with each other. Here, "no correlation" means that a different reference beam pattern is not superposed at the same pixel or position of the light modulator 130. The distance between the reference beam patterns or the gap between the reference beam pattern and the signal beam pattern can be embodied variously depending upon the numerical apertures of the objective lens 180. That is, when the numerical aperture is large, the resolution is high and thus the distance can be reduced. On the other hand, when the numerical aperture is small, the resolution is low and thus the distance can be increased.

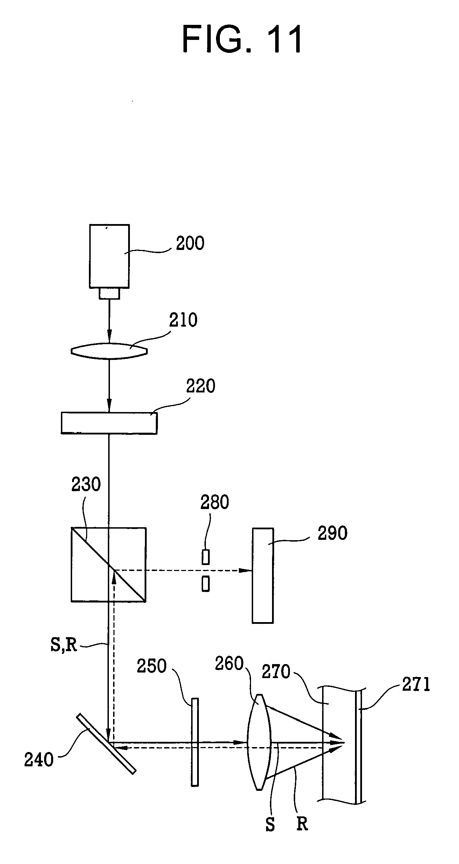

Fig. 11 is a diagram illustrating a configuration of an optical information processing apparatus according to another embodiment of the invention. As shown in Fig. 11, the optical information processing apparatus according to another embodiment of the invention includes a light source 200. The optical information processing apparatus further includes a lens 210 allowing a beam emitted from the light source 200 to travel as parallel light and a light modulator 220 generating a reference beam R and a signal beam S from the beam passing through the lens 210 by the use of a reference beam pattern 132 and a signal beam pattern 131 like in the above-mentioned embodiment.

The light modulator 220 includes a liquid crystal display device. Examples of the liquid crystal display device constituting the light modulator 130 can include a thin film transistor liquid crystal display device (TFT LCD) which is a typical active matrix type and a super twisted nematic (STN) LCD, a ferroelectric LCD, a polymer dispersed (PD) LCD, and a plasma addressing (PA) LCD which are passive matrix types.

In the light modulator 220, the signal beam pattern 131 is formed at the central portion of the light modulator 220 and the reference beam pattern 132 is formed around the signal beam pattern 131 of the light modulator 220 (see Fig. 2). The optical information processing apparatus further includes a beam splitter 230 guiding the signal beam S and the reference beam R coaxially traveling to an optical information storage medium 270 from the light modulator 220. The beam splitter 230 transmits a P polarized beam and reflects an S polarized beam. A shutter 280 and an optical information detector 290 are disposed at a position to which the S polarized beam reflected by the beam splitter 230 travels. The optical information detector 290 may be a charge-coupled device (CCD), a complementary metal-oxide semiconductor (CMOS) device, or an optical device capable of detecting light. The shutter 280 is shut at the time of recording optical information and is opened at the time of reproducing optical information.

A reflecting mirror 240 is disposed next to the beam splitter 230. A quarter-wavelength (λ/4) plate 250 and an objective lens 260 are disposed in the traveling direction of the beam reflected by the reflecting mirror 240. The quarter-wavelength plate 250 converts a P polarized beam into a circularly polarized beam. Accordingly, the beam irradiated to the optical information storage medium 270 through the objective lens 260 is a circularly polarized beam. A reflecting plane 271 is formed on the surface of the optical information storage medium 270 opposite to the surface to which the beam is irradiated. The reflecting plane 271 reflects the beam passing through the optical information storage medium 270 in the opposite direction. Accordingly, a reproduced beam at the time of reproducing optical information is reflected by the reflecting plane 271 and then travels to the optical information detector 290. The operating states are similar to those in the above-mentioned exemplary embodiment.

Hereinafter, an optical information recording method and an optical information reproducing method according to an exemplary embodiment of the invention will be described. The methods may be performed by the configuration of the above-mentioned optical information processing apparatus, or may be performed by optical information processing apparatuses according to modified embodiments having a technical concept equal or similar to that of the above-mentioned optical information processing apparatus. The configuration of the optical information processing apparatus referred to in the following description can be understood with reference to the exemplary embodiment shown in Figs. 1 **and 2.**

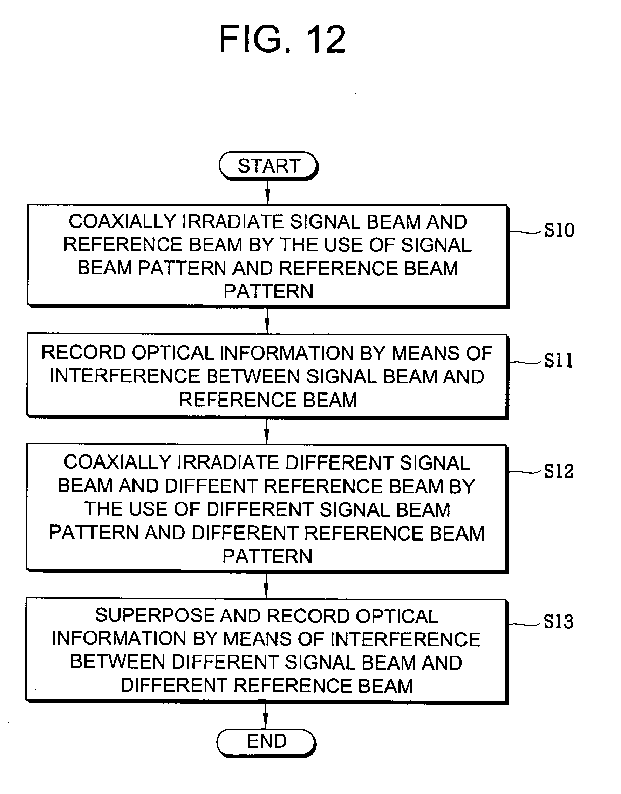

Fig. 12 is a flowchart illustrating an optical information recording method according to an exemplary embodiment of the invention. As shown in Fig. 12, in the optical information recording method according to an exemplary embodiment of the invention, a beam emitted from the light source 100 is allowed to travel to the light modulator 130 and the reference beam R and the signal beam S are reflected coaxially (S10).

The reference beam R and the signal beam S are coaxially formed by the use of the reference beam pattern 132 and the signal beam pattern 131 formed in the light modulator 130 and then travel toward the optical information storage medium 190. Specifically, the signal beam pattern 131 is formed in the central portion of the light modulator 130 and the first reference beam pattern 132 is formed in the peripheral portion of the signal beam pattern 131 with a predetermined gap therefrom.

The reference beam R and the signal beam S emitted from the light modulator 130 are irradiated to the optical information storage medium 190 through the reflecting mirror 160 and the objective lens 180. The signal beam S is incident on the central portion of the objective lens 180 and the reference beam R is incident on the circumferential portion of the objective lens 110. Since a convex lens is used as the objective lens 180, the objective lens 180 focuses the beams on the optical information storage medium 190. That is, since the refraction angle of the signal beam S incident on the central portion of the objective lens 180 is different from the refraction angle of the reference beam R incident on the circumferential portion of the objective lens 180, the reference beam R and the signal beam S are focused on a recording area in the optical information storage medium 190 and thus the optical information of the signal beam S is recorded by means of the interference between the reference beam R and the signal beam S as shown in Fig. 2 (S11). On the other hand, at the time of multiplexing record, the reference beam pattern 132 of the light modulator 130 for generating the reference beam R is changed to the second reference beam pattern 132' having no correlation (S12). Data of a different signal beam S can be recorded at the same position in a multiplexing manner (S13). The reference beam patterns 132 and 132' may have a ring shape, a fan shape, a circular comb shape, or a partial comb shape.

Now, the optical information multiplexing recording method according to an exemplary embodiment of the invention will be described in more detail.

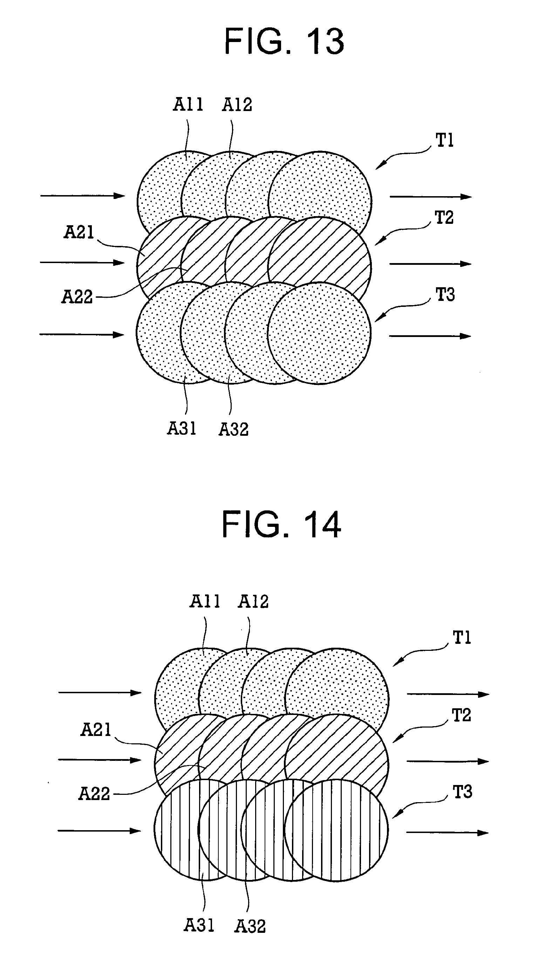

Fig. 13 is a diagram illustrating the optical information recording method according to the exemplary embodiment of the invention. As shown in Fig. 13, optical information is recorded using two reference beam patterns having no correlation with each other. In an exemplary embodiment of the invention, a plurality of tracks T1, T2, T3, ..., and Tn is formed on the optical information storage medium 190. A plurality of recording areas A is formed in each track T. The recording areas A partially overlap with each other as described above.

First, optical information is recorded in one track T1 of the optical information storage medium 190 by the use of a first reference beam pattern. The recording areas A11, A12, A13, and A14 in the same track T1 partially overlap with each other. A gap between the overlapping recording areas Ann is located at a null position between side lobes. The gap may be located at a second or next null position, or may be located at a first null position between a main lobe and the side lobes depending upon the diffraction efficiency.

Next, at the time of recording optical information in the second track T2 adjacent to the first track T1, the optical information is recorded by the use of the reference beam generated from a different reference beam pattern having no correlation with the previously used reference beam pattern. The neighboring recording areas A21 and A22 partially overlap with each other and also partially overlap with the recording areas A11 and A12 of the first track T1. The gap between the tracks T1 and T2 is located at a null position between the side lobes of the recording areas A11 and A12 formed in the first track T1. Subsequently, optical information is recorded in the third track T3 so as to partially overlap with the second track T2 by the use of the reference beam used for recording the optical information in the first track T1, and then optical information is recorded in the fourth track by the use of the reference beam used for recording the optical information in the second track.

Fig. 14 is a diagram illustrating an optical information recording method according to another exemplary embodiment of the invention. As shown in Fig. 14, optical information is recorded by the use of reference beams generated from three or more kinds of reference beam patterns having no correlation with each other.

Optical information is recorded in the recording areas A11 and A12 of the first track T1 in the optical information storage medium 190 by the use of a reference beam generated from a first reference beam pattern. Optical information is recorded in the recording areas A21 and A22 of the second track T2 adjacent to the first track T1 by the use of a reference beam generated from a second reference beam pattern having no correlation with the first reference beam pattern. Optical information is recorded in the recording areas A31 and A32 of the third track T3 by the use of another reference beam generated from a third reference beam pattern. Then, optical information is recorded in the fourth track by the use of the reference beam used for recording the optical information in the first track. The neighboring recording areas A partially overlap with each other and also partially overlap with the recording areas A in the previous track T. Here, the gap between the tracks T is located at a null position between the side lobes of the recording areas A of the previous track T.

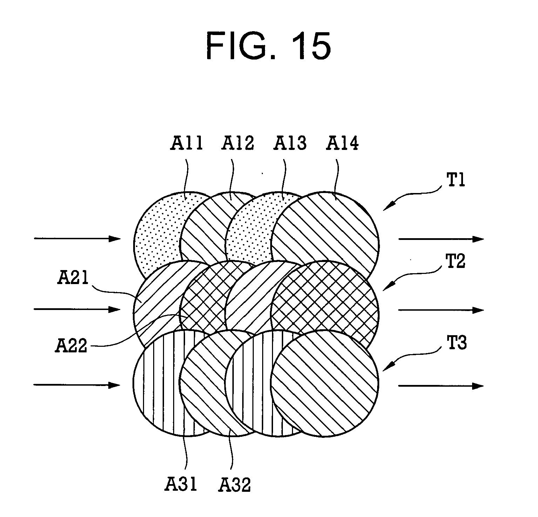

Fig. 15 is a diagram illustrating an optical information recording method according to another exemplary embodiment of the invention. As shown in Fig. 15, optical information is recorded in the first track T1 by the use of two different reference beam patterns having no correlation with each other. That is, optical information is recorded in the first recording area A11 and the second recording area A12 by the use of different reference beams, optical information is recorded in the third recording area A13 by the use of the reference beam used for recording the optical information in the first recording area A11, and optical information is recorded in the fourth recording area A14 by the use of the reference beam used for recording the optical information in the second recording area A12. By repeating these operations, the recording of the optical information in the first track T1 is completed. The recording areas A partially overlap with each other and the overlapping position may be a null position between the side lobes.

Optical information is recorded in the second track T2 by the use of two reference beam patterns having no correlation with each other in the same way as recording the optical information in the first track T1. The reference beam patterns have no correlation with the reference beam pattern used for recording the optical information in the first track T1.

Subsequently, optical information is recorded din the third track T3 by the use of the two reference beams used for recording the optical information in the first track T1 in the same way as recording the optical information in the first track T1. Optical information is recorded in the fourth track in the same way as recording the optical information in the second track T2. Then, optical information is recorded in the next tracks by repeating these operations. As a result, since the optical information is recorded in the recording areas A adjacent to each other and overlapping with each other among the recording areas A by the use of the reference beam patterns having no correlation with each other, it is possible to reduce noises at the time of reproducing the optical information as well as to enhance the recording density of the optical information. On the other hand, the first reference beam pattern 132 and the second reference beam pattern 132' for multiplexing record may be formed in ring shapes having different diameters, fan shapes formed at different positions, circular comb shapes disposed at different angles, or partial comb shapes formed at different positions. The reference beam patterns may be formed in other shapes.

Two methods can be used to multiplex and record the optical information while changing the reference beam patterns 132 and 132'. In one method, first, optical information is recorded in all the recording areas of the optical information storage medium 190 while changing the optical information of the signal beam S by the use of the reference beam R generated from the first reference beam pattern 132. Thereafter, optical information is superposed and recorded in all the recording areas of the optical information storage medium 190 while changing the optical information of the signal beam S by the use of the second reference beam pattern 132'.

In the other method, optical information is superposed and recorded in a recording area of the optical information storage medium 190 by the use of reference beams R generated from a plurality of different reference beam patterns 132 and 132', and then optical information is superposed and recorded in another recording area by the use of the different reference beams R.

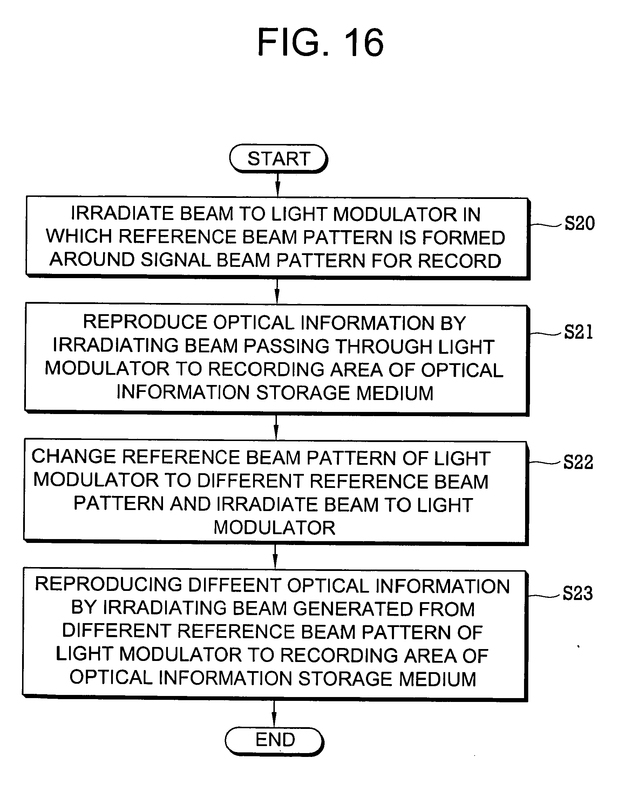

Fig. 16 is a flowchart illustrating an optical information reproducing method according to an exemplary embodiment of the invention. As shown in Fig. 16, first, a beam is irradiated to the light modulator 130 in which the first reference beam pattern 132 is formed around the signal beam pattern 131 for recording (S20). The first reference beam pattern 132 is formed in the same way as described in the above-mentioned optical information recording method. Then, the beam emitted from the light modulator 130 is irradiated to the recording area of the optical information storage medium 190 to reproduce the optical information (S21). Then, the first reference beam pattern 132 of the light modulator 130 is changed to the second reference beam pattern 132' and then a beam is irradiated to the light modulator 130 (S22). A different reference beam R having no correlation is generated from the second reference beam pattern 132' of the light modulator 130. Different optical information is reproduced from the recording area of the optical information storage medium 190 by the use of the different reference beam R (S23).

On the other hand, the reference beam patterns 132 and 132' for reproducing optical information should be in the same shape as the reference beam patterns 132 and 132' used for recording the corresponding optical information. In other words, when a shape of reference beam patterns 132 and 132' is used for recording optical information, the same shape of reference beam pattern 132 and 132' as used for recording the optical information should be used to reproduce the corresponding optical information. Here, the same shape means that the beam having the same reference pattern, phase, and wavelength should be irradiated, but not that the beam should be irradiated through the same optical system from the same light source.

In the optical information recording method according to the exemplary embodiments of the invention, since optical information can be superposed and recorded in the same recording area by coaxially irradiating the reference beam and the signal beam to the optical information storage medium, it is possible to further enhance the recording density of optical information.

In the optical information processing apparatus, the optical information recording method, and the optical information reproducing method according to the invention, by allowing the reference beam and the signal beam to coaxially travel so as to record optical information and varying the reference beam pattern to a variety of different reference beam patterns having no correlation with each other so as to provide a variety of reference beams, it is possible to more efficiently multiplex the optical information and to enhance the storage density of the utilization efficiency of the holographic optical information.

## Claims

1. An optical information recording apparatus comprising:
a light source;
a light modulator which has a reference beam pattern for converting a beam emitted from the light source into a reference beam and a signal beam pattern for converting the beam into a signal beam and varies the reference beam pattern at the time of multiplexing and recording optical information; and
a lens allowing the optical information to be recorded in an optical information storage medium by means of interference between the reference beam and the signal beam when the signal beam and the reference beam emitted from the light modulator are irradiated to the optical information storage medium.

2. The optical information recording apparatus according to claim 1, wherein the reference beam and the signal beam are coaxially irradiated to the lens and the lens allows interference between the signal beam and the reference beam to occur on the optical information storage medium by making a refraction angle of the reference beam to be different from a refraction angle of the signal beam when the signal beam and the reference beam are irradiated to the optical information storage medium.

3. The optical information recording apparatus according to claim 1, wherein the reference beam pattern includes a first reference beam pattern and a second reference beam pattern having no correlation with each other at the time of multiplexing record.

4. The optical information recording apparatus according to claim 3, wherein the first reference beam pattern and the second reference beam pattern have one of a ring shape, a fan shape, a circular comb shape, and a partial comb shape.

5. The optical information recording apparatus according to claim 3, wherein the first reference beam pattern and the second reference beam pattern for multiplexing record have one of ring shapes having different diameters, fan shapes formed at different positions, circular comb shapes disposed at different angles, and partial comb shapes formed at different positions.

6. The optical information recording apparatus according to claim 1, wherein the light modulator is one of a liquid crystal display device modulating a beam while transmitting the beam and a digital micro-mirror device modulating a beam while reflecting the beam.

7. An optical information reproducing apparatus comprising:
a light source;
a light modulator which has a reference beam pattern for converting a beam emitted from the light source into a reference beam and varies the reference beam pattern at the time of reproducing optical information multiplexed and recorded in an optical information storage medium;
a lens guiding the reference beam, which travels in the traveling direction of a recording reference beam used at the time of record, from the light modulator to the optical information storage medium; and
an optical information detector detecting a reproduced beam emitted from the optical information storage medium.

8. The optical information reproducing apparatus according to claim 7, wherein the reference beam pattern includes a first reference beam pattern and a second reference beam pattern having no correlation with each other at the time of multiplexing reproduction.

9. The optical information reproducing apparatus according to claim 8, wherein the first reference beam pattern and the second reference beam pattern have one of a ring shape, a fan shape, a circular comb shape, and a partial comb shape.

10. The optical information reproducing apparatus according to claim 9, wherein the first reference beam pattern and the second reference beam pattern for multiplexing reproduction have one of ring shapes having different diameters, fan shapes formed at different positions, circular comb shapes disposed at different angles, and partial comb shapes formed at different positions.

11. The optical information reproducing apparatus according to claim 9, wherein the light modulator is one of a liquid crystal display device modulating a beam while transmitting the beam and a digital micro-mirror device modulating a beam while reflecting the beam.

12. An optical information recording method comprising:
forming a signal beam from a beam emitted from a light source by the use of a signal beam pattern and forming a reference beam coaxial with the signal beam from the beam emitted from the light source by the use of a reference beam pattern;
recording optical information in an optical information storage medium by means of interference between the reference beam and the signal beam, when the signal beam and the reference beam are irradiated to the optical information storage medium;
forming a different signal beam by the use of a different signal beam pattern and forming a different reference beam coaxial with the different signal beam by the use of a different reference beam pattern for multiplexing record; and
superposing and recording optical information in the optical information storage medium by means of interference between the different reference beam and the different signal beam, when the different signal beam and the different reference beam are irradiated to the optical information storage medium.

13. The optical information recording method according to claim 12, wherein the reference beam pattern and the different reference beam pattern have no correlation with each other at the time of multiplexing record.

14. The optical information recording method according to claim 12, wherein the reference beam pattern and the different reference beam pattern have one of a ring shape, a fan shape, a circular comb shape, and a partial comb shape.

15. The optical information recording method according to claim 12, wherein the reference beam pattern and the different reference beam pattern for multiplexing record have one of ring shapes having different diameters, fan shapes formed at different positions, circular comb shapes disposed at different angles, and partial comb shapes formed at different positions.

16. The optical information recording method according to claim 12, wherein the multiplexing record is performed by recording optical information in an entire recording area of the optical information storage medium by the use of the reference beam generated based on the reference beam pattern and then superposing and recording optical information in the entire recording area of the optical information storage medium by the use of the different reference beam generated based on the different reference beam pattern.

17. The optical information recording method according to claim 12, wherein the multiplexing record is performed by recording optical information in a recording area of the optical information storage medium by the use of a plurality of different reference beams and then recording optical information in another recording area of the optical information storage medium by the use of the plurality of different reference beams.

18. An optical information recording method comprising:
generating a signal beam by modulating recording optical information with a light modulator and generating a reference beam coaxial with the signal beam by the use of a reference beam pattern with the light modulator;
recording the optical information in an optical information storage medium by means of interference between the signal beam and the reference beam and forming a track including a plurality of recording areas, when the signal beam and the reference beam are irradiated to the optical information storage medium; and
irradiating a different reference beam, which is obtained by changing the reference beam pattern to a different reference beam pattern, along with the signal beam to the optical information storage medium and forming a different track including a plurality of different recording areas partially overlapping with the recording areas of the track.

19. The optical information recording apparatus according to claim 18, wherein the reference beam pattern and the different reference beam pattern have one of ring shapes having different diameters, fan shapes formed at different positions, circular comb shapes disposed at different angles, and partial comb shapes formed at different positions.

20. The optical information recording method according to claim 18, wherein the optical information is recorded in the neighboring recording area in the same track by the use of the different reference beam obtained by changing the reference beam pattern into the different reference beam pattern having no correlation with each other.

21. The optical information recording method according to claim 18, wherein the optical information is recorded in the recording areas of the different track adjacent to the recording areas of the track by the use of the reference beams having no correlation with each other.

22. The optical information recording method according to claim 18, wherein the recording areas partially overlap with the neighboring recording areas.

23. The optical information recording method according to claim 18, wherein interference between the reference beam and the signal beam is allowed to occur on the optical information storage medium by making a refraction angle of the reference beam and a refraction angle of the signal beam different from each other when the signal beam and the reference beam are irradiated to the optical information storage medium.

24. An optical information recording method comprising:
generating a signal beam by modulating recording optical information with a light modulator and generating a reference beam coaxial with the signal beam by the use of a reference beam pattern with the light modulator;
recording the optical information of the signal beam in an optical information storage medium by means of interference between the signal beam and the reference beam and forming a track including a plurality of recording areas when the signal beam and the reference beam are irradiated to the optical information storage medium, wherein the recording areas adjacent to each other are formed to partially overlap with each other by the use of a different reference beam having not correlation with the reference beam along with the reference beam; and
forming a different track including a plurality of different recording areas, in which the optical information of the signal beam is recorded, at positions overlapping with the recording areas of the track by the use of a different reference beam having no correlation with the reference beam, wherein the different recording areas adjacent to each other are formed to partially overlap with each other by the use of the reference beams having no correlation with each other.

25. An optical information reproducing method comprising:
irradiating a beam to a light modulator in which a reference beam pattern is formed around a signal beam pattern for record;
reproducing optical information from an optical information storage medium by irradiating the reference beam passing through the light modulator to a recording area of the optical information storage medium;
changing the reference beam pattern of the light modulator to a different reference beam pattern and irradiating the beam to the light modulator; and
reproducing different optical information from the optical information storage medium by irradiating a different reference beam generated from the different reference beam pattern to the recording area of the optical information storage medium.

26. The optical information reproducing method according to claim 25, wherein the reference beam patterns for multiplexing reproduction have no correlation with each other.

27. The optical information reproducing method according to claim 25, wherein the reference beam patterns have one of a ring shape, a fan shape, a circular comb shape, and a partial comb shape.

28. The optical information reproducing method according to claim 25, wherein the reference beam patterns for multiplexing reproduction have one of ring shapes having different diameters, fan shapes formed at different positions, circular comb shapes disposed at different angles, and partial comb shapes formed at different positions.

29. The optical information reproducing method according to claim 25, wherein the beam reproduced from the optical information storage medium is reflected by the optical information storage medium and then is detected.

30. The optical information reproducing method according to claim 26, wherein the beam reproduced from the optical information storage medium is transmitted by the optical information storage medium and then is detected.
